(19) Europäisches Patentamt
European Patent Office
Office européen des brevets

(11) Veröffentlichungsnummer: **0 017 754**
**A1**

(12) # EUROPÄISCHE PATENTANMELDUNG

(21) Anmeldenummer: **80101254.3**

(51) Int. Cl.³: **C 08 J 7/04**, B 05 D 7/02

(22) Anmeldetag: **12.03.80**

(30) Priorität: **21.04.79 DE 2916271**

(43) Veröffentlichungstag der Anmeldung: **29.10.80**
**Patentblatt 80/22**

(84) Benannte Vertragsstaaten: **AT BE CH FR GB IT NL SE**

(71) Anmelder: **METZELER KAUTSCHUK GMBH,**
**Westendstrasse 131, D-8000 München 2 (DE)**

(72) Erfinder: **Müller, Hanns Peter, Dr., St. Pankratiusstrasse 2, D-5068 Odenthal (DE)**
Erfinder: **Wagner, Kuno, Dr., Am Kiesberg 8, D-5090 Leverkusen (DE)**
Erfinder: **Blahak, Johannes, Dr., Gautinger Strasse 3, D-8035 Gauting-Buchendorf (DE)**
Erfinder: **Menk, Hermann, Dr., Prielweg 6, D-8990 Bodolz (DE)**

(74) Vertreter: **Michelis, Theodor, Dipl.-Ing.,**
**Westendstrasse 131, D-8000 München 2 (DE)**

(54) **Verfahren zur Herstellung von mit einer Lackschicht versehenen Formkörpern aus vulkanisiertem Gummi und eine anvulkanisierte Lackschicht aufweisende Formkörper aus vulkanisiertem Gummi.**

(57) Zur Herstellung eines Formteils mit einer fest haftenden Lackschicht wird auf die Oberfläche des Formteils aus olefinische Doppelbindungen aufweisendem Kautschuk vor der Vulkanisation ein Lack aufgetragen, der ein an der Vulkanisationsreaktion teilnehmende Gruppen aufweisendes Bindemittel enthält und das so beschichtete Formteil einer Vulkanisationsreaktion unterzieht.

EP 0 017 754 A1

Verfahren zur Herstellung von mit einer Lackschicht versehenen Formkörpern aus vulkanisiertem Gummi und eine anvulkanisierte Lackschicht aufweisende Formkörper aus vulkanisiertem Gummi

Die vorliegende Erfindung betrifft ein neuartiges Verfahren zur Herstellung von mit einer fest haftenden Lackschicht versehenen Formteilen aus vulkanisiertem Gummi, bei welchem man die Formteile vor ihrer Vulkanisation mit einem zur Teilnahme an der Vulkanisationsreaktion befähigten Lack beschichtet und anschließend vulkanisiert, sowie mit einer anvulkanisierten Lackschicht versehene Gummiformteile.

Die Lackierung von Gummi bereitet wegen der zumeist apolaren Oberfläche des zu lackierenden Substrats und der darauf zurückzuführenden schlechten Haftung der Lackschicht erhebliche praktische Schwierigkeiten. So hat man bereits versucht, diese Haftungsprobleme durch eine geeignete Vorbehandlung der zu lackierenden Oberfläche

z.B. mit Hilfe eines Oxidationsmittels oder unter Verwendung einer UV-Bestrahlung zu überwinden (NL-OS 7506793). Gemäß DE-OS 2 823 350 versuchte man die Haftungsprobleme durch Verwendung spezieller Polyurethanlacke zu überwinden. Auch beim Verfahren dieser Veröffentlichung erfolgt die Lackierung nach der Vulkanisation, so daß auch nach dem Verfahren dieser Veröffentlichung die Haftungsprobleme nicht grundsätzlich gelöst werden konnten.

Es war die Aufgabe der vorliegenden Erfindung, ein Verfahren zur Verfügung zu stellen, welches die Herstellung von Gummiformteilen gestattet, die mit einer fest haftenden, mit dem Formteil eine Einheit bildenden Lackschicht versehen sind. Diese Aufgabe konnte durch das nachstehend näher beschriebene erfindungsgemäße Verfahren gelöst werden.

Gegenstand der vorliegenden Erfindung ist ein Verfahren zur Herstellung eines mit einer fest haftenden Lackschicht versehenen Formteils aus vulkanisiertem Gummi, dadurch gekennzeichnet, daß man auf mindestens einen Teil der Oberfläche des Formteils aus, die üblichen Hilfs- und Zusatzmittel enthaltendem, olefinische Doppelbindungen aufweisendem Kautschuk vor der Vulkanisation einen Lack aufträgt, welcher ein an der Vulkanisationsreaktion teilnehmende Gruppen aufweisendes Bindemittel enthält, und das so beschichtete Formteil einer Vulkanisationsreaktion unterzieht.

Gegenstand der vorliegenden Erfindung sich auch mit einer anvulkanisierten Lackschicht versehene Gummiformteile.

Beim erfindungsgemäßen Verfahren werden vulkanisierbare Kautschuk-Formteile vor ihrer Vulkanisation mit einem anvulkanisierbaren Lack versehen und anschließend einer an sich bekannten Vulkanisationsreaktion unterzogen. Selbstverständlich kann die Lackierung des Formkörpers auf der gesamten Oberfläche oder auch nur einem Teil der Oberfläche des Formkörpers erfolgen.

Für das erfindungsgemäße Verfahren sind beliebige vulkanisierbare, olefinisch ungesättigte Kautschuk-Typen geeignet, wie z.B. Naturkautschuk (cis-1,4-Polyisopren oder trans-1,4-Polyisopren) oder Synthesekautschuk wie z.B. Polybutadien-, Styrol-butadien-, Polychloropren-, Polypentenamer- oder EPDM-(Ethylen-, Propylen-, Dien-Monomere)Kautschuk oder beliebige Abmischungen dieser beispielhaft genannten Kautschuk-Typen. Im allgemeinen weisen die beim erfindungsgemäßen Verfahren zu lackierenden Kautschuk-Typen einen Gehalt an olefinischen Doppelbindungen =C=C=, bei Zugrundelegung eines Molekulargewichts für diese Gruppierung von 24, von 1 bis 45, vorzugsweise 10 bis 40 Gew.-%, auf.

Die Vulkanisation kann beim erfindungsgemäßen Verfahren nach beliebigen an sich bekannten physikalischen oder chemischen Methoden erfolgen. Beispielsweise können die Formteile physikalisch durch Elektronenbestrahlung oder sonstige energiereiche Bestrahlung oder chemisch unter Mitverwendung von Schwefel oder Schwefelchloriden sowie den an sich bekannten Vulkanisationsbeschleunigern wie z.B. Mercaptobenzthiazol, Mercaptobenzthiazol-Derivaten oder Thiuramdisulfide oder unter Verwendung von

Peroxiden wie z.B. Benzoylperoxid als Radikalbildner.

Erfindungswesentlich ist die Beschichtung des unvulkanisierten Formteils mit einem Lack, der als Bindemittel bzw. Bindemittelkomponente mindestens eine zur Teilnahme an der Vulkanisationsreaktion befähigte Verbindung aufweist.

Besonders gut geeignet sind Ein- oder Zweikomponenten-Polyurethanlacke, die als Bindemittel bzw. als Bindemittelkomponente eine olefinisch ungesättigte, zur Teilnahme an der Vulkanisationsreaktion befähigte Verbindung enthalten. Die Konzentration an olefinisch ungesättigten Gruppierungen =C=C= sollte im Bindemittel des zum Einsatz gelangenden Lackes, unter Zugrundelegung eines Molekulargewichts für die olefinisch ungesättigte Gruppierung, von 24, 0,1 bis 8, vorzugsweise 0,5 bis 6 Gew.-%, bezogen auf Bindemittel, betragen.

Geeignete Zweikomponenten-Polyurethanlacke sind beliebige an sich bekannte lösungsmittelhaltige oder lösungsmittelfreie Polyurethanlacke, die als Bindemittel sowohl organische Polyisocyanate als auch organische Polyhydroxylverbindungen enthalten, wobei die Menge dieser Bindemittelkomponenten vorzugsweise einem NCO/OH-Äquivalentverhältnis von 0,5:1 bis 1,5:1, insbesondere 0,9:1 bis 1,1:1 entsprechen, und wobei mindestens eine der genannten Komponenten olefinisch ungesättigt und zur Teilnahme an der Vulkanisationsreaktion befähigt ist.

Geeignete Polyisocyanate sind beispielsweise solche der Formel

$$Q\ (NCO)_n$$

in der

n = 2-4, vorzugsweise 2, und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeutet, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Vorzugsweise werden die an sich bekannten "Lackpolyisocyanate" d.h. beispielsweise Biuretpolyisocyanate auf Basis von Hexamethylendiisocyanat, Isocyanuratgruppen aufweisende Polyisocyanate auf Basis von 2,4-Diisocyanatotoluol, 1-Isocyanato-3,3,5-trimethyl-5-isocyanatomethyl-cyclohexan (IPDI) oder Hexamethylendiisocyanat oder Urethangruppen aufweisende Polyisocyanate wie z.B. die Umsetzungsprodukte von 3 Mol 2,4-Diisocyanatotoluol mit einem Mol Trimethylolpropan oder von 3 Mol IPDI mit einem Mol Trimethylolpropan.

Bei der Polyhydroxyl-Komponente handelt es sich um die in der Polyurethanchemie an sich bekannten höhermolekularen Polyole des Molekulargewichtsbereichs 300 bis 10 000, vorzugsweise 800 bis 4 000 gegebenenfalls in Kombination mit bis zu 50 Hydroxyläquivalentprozent an niedermolekularen Polyolen des Molekulargewichtsbereichs 62 - 300.

Geeignete höhermolekulare Polyhydroxylverbindungen sind insbesondere die an sich bekannten Polyesterpolyole wie z.B. die Umsetzungsprodukte von mehrwertigen Alkoholen wie z.B. Äthylenglykol, Propylenglykol-1,2 oder -1,3, Tetramethylenglykol, Hexamethylenglykol, 2-Methyl-propandiol-(1,3), Diäthylenglykol, Triäthylenglykol, Dipropylenglykol, Trimethylolpropan oder Glycerin mit vorzugsweise zweiwertigen Carbonsäuren bzw. deren Anhydride wie z.B. Bernsteinsäure, Adipinsäure, Korksäure, Azelainsäure, Phthalsäure, Isophthalsäure, Tetrahydrophthalsäure, Hexahydrophthalsäure, Maleinsäure, Fumarsäure oder Terephthalsäure.

Geeignete höhermolekulare Polyhydroxylverbindungen sind insbesondere auch die an sich bekannten Dihydroxypolycarbonate, wie sie z.B. aus den genannten niedermolekularen Glykolen in an sich bekannter Weise mit Diphenylcarbonat oder Phosgen zugänglich sind.

Geeignete höhermolekulare Polyhydroxylverbindungen sind außerdem die an sich bekannten Polyhydroxypolyäther wie sie in an sich bekannter Weise durch Alkoxylierung insbesondere mit Äthylenoxid und/oder Propylenoxid geeigneter Startermoleküle wie z.B. Wasser oder den bereits genannten niedermolekularen Polyolen zugänglich sind.

Geeignete höhermolekulare Polyole sind auch die an sich bekannten Hydroxylgruppen aufweisende Polyacetale, Polyesteramide oder Polyacrylate.

Geeignete niedermolekulare Polyole sind z.B. die bei der Herstellung der Polyester bereits genannten niedermolekularen Alkohole oder auch ungesättigte mehrwertige Alkohole des Molekulargewichtsbereichs 88 bis 300 wie z.B. 2-Buten-1,4-diol, 3-Hexen-1,6-diol, 8-Hexadecen-1,16-diol, Trimethylolpropanmonoallyläther, 2-Buten-1,2-diol, 2-Methylen-1,3-propandiol,

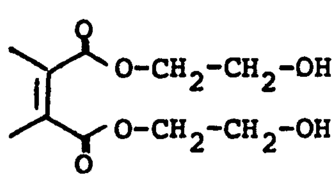

Maleinsäure-bis-glykolester, welcher durch Umesterungsreaktion von Maleinsäure-bis-methylester und Äthylenglykol gewonnen wird,

oder deren Alkoxylierungsprodukte.

Der erfindungswesentlichen Bedingung, daß das Lackbindemittel mindestens eine an der Vulkanisationsreaktion teilhabende Komponente aufweisen muß, wird im Falle der Zweikomponenten-Polyurethanlacke dadurch Rechnung getragen, daß die Polyisocyanat-Komponente oder vorzugsweise die Polyhydroxylkomponente mindestens eine olefinisch ungesättigte, zur Vulkanisationsreaktion befähigte Gruppierung aufweist. Dies kann beispielsweise durch Mitverwendung von olefinisch ungesättigten Polyisocyanaten, olefinisch ungesättigten höhermolekularen Polyhydroxylverbindungen und/oder olefinisch ungesättigten niedermolekularen Polyolen erfolgen.

Geeignete ungesättigte Polyisocyanate sind beispielsweise das Umsetzungsprodukt aus Tris-(isocyanatohexyl)-biuret mit ungesättigten Hydroxylverbindungen wie z.B. Methacrylsäure-ß-hydroxypropylester oder die Umsetzungsprodukte der oben beispielhaft genannten Lackpolyisocyanate mit ungesättigten Alkoholen wie z.B. Buten-2-diol-1,4 oder Allylalkohol, wobei vorzugsweise jeweils die Reaktionspartner in solchen Mengen zum Einsatz gelangen, daß im statistischen Mittel als Umsetzungsprodukte ungesättigte Polyisocyanate mit einer Isocyanatfunktionalität von mindestens 2 resultieren.

Geeignete ungesättigte höhermolekulare Polyhydroxylverbindungen sind beispielsweise Polyesterpolyole, die unter Mitverwendung von olefinisch ungesättigten Dicarbonsäuren wie z.B. Tetrahydrophthalsäure, Maleinsäure und/oder Fumarsäure und/oder unter Mitverwendung von olefinisch ungesättigten niedermolekularen Polyolen der oben bereits genannten Art erhalten worden sind; ungesättigte Polyätherpolyole wie sie z.B. unter Verwendung

der obengenannten ungesättigten niedermolekularen Alkohole als Starter bei der Alkoxylierungsreaktion erhalten werden oder ungesättigte Dihydroxypolycarbonate, wie sie unter Mitverwendung der genannten niedermolekularen ungesättigten Polyhydroxylverbindungen bei der Herstellung der Polycarbonate erhältlich sind.

Geeignete niedermolekulare ungesättigte Verbindungen sind die bereits beispielhaft genannten Verbindungen, wobei 2-Buten-1,4-diol bevorzugt zum Einsatz gelangt.

Für das erfindungsgemäße Verfahren geeignete Einkomponenten-Polyurethanlacke sind sowohl unter dem Einfluß von Luftfeuchtigkeit trocknende Einkomponentenlacke auf Basis von NCO-Präpolymeren als auch physikalisch trocknende, lösungsmittelhaltige Polyurethanlacke.

Bei den unter dem Einfluß von Luftfeuchtigkeit trocknenden Einkomponentenlacken handelt es sich um solche, die als Bindemittel Isocyanatgruppen aufweisende Präpolymere enthalten, die beispielsweise durch Umsetzung der bereits beispielhaft genannten Polyisocyanate mit den bereits beispielhaft genannten höher- und/oder niedermolekularen Polyhydroxylverbindungen in einem über 1,5:1 vorzugsweise zwischen 2:1 und 4:1 liegenden NCO/OH-Äquivalentverhältnis erhalten werden. Bezüglich der erfindungswesentlichen Bedingung des Vorliegens von olefinischen Doppelbindungen gelten hier die in Zusammenhang mit den Zweikomponenten-Polyurethanlacken gemachten Ausführungen sinngemäß.

Bei den physikalisch trocknenden Polyurethanlacken handelt es sich um lösungsmittelhaltige Lacke, die als Bindemittel filmbildende, im wesentlichen lineare hochmolekulare Polyurethane enthalten. Diese Polyurethane werden vorzugsweise

aus organischen Diisocyanaten der oben beispielhaft genannten Art, difunktionellen höher- und/oder niedermolekularen Hydroxylverbindungen der bereits beispielhaft genannten Art und gegebenenfalls Diamin-Kettenverlängerungsmitteln des Molekulargewichtsbereichs 60 bis 300 in an sich bekannter Weise erhalten. Bei der Herstellung der linearen Polyurethane können als Kettenabbrecher auch monofunktionelle Verbindungen, d.h. Monoisocyanate wie Hexylisocyanat, Cyclohexylisocyanat oder Phenylisocyanat oder einwertige Alkohole wie Methanol, Äthanol, Butanol, tert. Butanol, Octanol, Isopropanol oder Cyclohexanol oder auch Monoamine wie Methylamin, Butylamin, Dibutylamin oder Stearylamin mitverwendet werden. Auch olefinisch ungesättigte, gegenüber Isocyanatgruppen monofunktionelle Verbindungen wie z.B. Acrylsäure-ß-hydroxypropylester, Methacrylsäure-hydroxyalkylester oder Allylalkohol können mitverwendet werden. Die Mitverwendung von höher als difunktionellen Aufbaukomponenten der oben beispielhaft genannten Art ist insbesondere bei gleichzeitiger Mitverwendung der genannten monofunktionellen Aufbaukomponenten nicht grundsätzlich ausgeschlossen.

Auch bei der Herstellung der Bindemittel für die physikalisch trocknenden Lacke werden die erfindungswesentlichen olefinischen Doppelbindungen durch Mitverwendung der bereits beispielhaft genannten olefinisch ungesättigten Aufbaukomponenten eingebaut. Vorzugsweise erfolgt auch hier der Einbau der olefinischen Doppelbindungen durch Mitverwendung von niedermolekularen, olefinisch ungesättigten Glykolen des Molekulargewichtsbereichs 88-300 der bereits beispielhaft genannten Art.

Vorzugsweise erfolgt die Herstellung der linearen Polyurethane in zwei Stufen nach dem Präpolymer-Prinzip, wobei zunächst aus einer Polyhydroxylkomponente und einer Diisocyanat-Komponente in einem NCO/OH-Äquivalentverhältnis von 1,1:1 bis 4:1, vorzugsweise 1,2:1 bis 3:1, bei 80 bis 150°C ein NCO-Präpolymer hergestellt wird. Die Polyhydroxylkomponente setzt sich dabei vorzugsweise aus a) höhermolekularem Diol der beispielhaft genannten Art, b) ungesättigtem niedermolekularem Diol der beispielhaft genannten Art und c) niedermolekularem Diol des Molekulargewichtsbereichs 62 bis 300 zusammen, wobei die Mengenverhältnisse der einzelnen Komponenten so gewählt werden, daß pro Hydroxylgruppe der Komponente a) 0,01 bis 12 Hydroxylgruppen der Komponente b) und 0 bis 10 Hydroxylgruppen der Komponente c) vorliegen.

Nach der Präpolymerbildung, deren Beendigung durch NCO-Titration ermittelt werden kann, erfolgt eine Kettenverlängerungsreaktion, vorzugsweise mit einem Diamin-Kettenverlängerungsmittel entweder in der Schmelze oder aber auch in Lösung. Geeignete Diamin-Kettenverlängerungsmittel sind vorzugsweise primäre Aminogruppen aufweisende aliphatische, cycloaliphatische oder gemischt aliphatischcycloaliphatische Diamine des Molekulargewichtsbereichs 60-300. Beispiele sind Äthylendiamin, Tetramethylendiamin, Hexamethylendiamin, 4,4'-Diamino-dicyclohexylmethan, 1,4-Diaminocyclohexan, 4,4'-Diamino-3,3'-dimethyl-dicyclohexylmethan oder 1-Amino-3,3,5-trimethyl-5-aminomethylcyclohexan (Isophorondiamin). Ganz besonders bevorzugt werden 4,4'-Diaminodicyclohexylmethan oder das zuletzt genannte Isophorondiamin eingesetzt.

Geeignete Lösungsmittel sind beispielsweise Methylenchlorid, Mischungen von Toluol mit Methanol oder Isopropanol, Essigsäureäthylester, Essigsäurebutylester oder ein beliebiges anderes inertes Lacklösungsmittel. Die Kettenverlängerungsreaktion kann auch besonders vorteilhaft in beheizten Reaktionsschneckenmaschinen durchgeführt werden. Die Kettenverlängerungsreaktion wird im allgemeinen im Temperaturbereich von 10 bis 250, vorzugsweise 80 bis 220°C durchgeführt. Das Diamin-Kettenverlängerungsmittel wird hierbei im allgemeinen in einer Menge eingesetzt, die einem $NCO/NH_2$-Äquivalentverhältnis von 0,8:1 bis 1,2:1, vorzugsweise 1:1 entspricht.

Die gegebenenfalls mitzuverwendenden monofunktionellen Aufbaukomponenten können im Falle der Isocyanate und Alkohole bereits bei der Herstellung der NCO-Präpolymeren, im Falle der Amine bei der Kettenverlängerungsreaktion eingesetzt werden. Eine denkbare Variante der Kontrolle des Molekulargewichts durch Mitverwendung von monofunktionellen Aufbaukomponenten besteht auch beispielsweise darin, daß man aus difunktionellen Aufbaukomponenten hergestellte NCO-Präpolymere mit einer geringfügig unterschüssigen Menge an Diamin-Kettenverlängerungsmitteln in Gegenwart von einwertigen Alkoholen wie z.B. Isopropanol zur Reaktion bringt, wobei die Isocyanatgruppen zunächst mit dem reaktionsfreudigeren Diamin bis zu dessen völligen Verschwindens abreagieren, worauf sich eine kettenabbrechende Reaktion der dann noch verbleibenden Isocyanatgruppen mit dem als Lösungsmittel verwendeten Isopropanol anschließt.

Im übrigen werden die Art und Mengenverhältnisse der Aufbaukomponenten vorzugsweise so gewählt, daß sich rechnerisch ein mittleres Molekulargewicht der linearen Polyurethane bzw. Polyurethan-Polyharnstoffe von 10 000 bis $\infty$ (theoretisch bei genau äquivalenten Mengenverhältnissen von ausschließlich difunktionellen Aufbaukomponenten), vorzugsweise zwischen 15 000 und 200 000 ergibt. Ein zur Einstellung eines solchen Molekulargewichts erforderlicher Kettenabbruch kann sowohl durch Mitverwendung eines geringen Überschusses an difunktionellen, gegenüber Isocyanatgruppen reaktionsfähigen Aufbaukomponenten, insbesondere Kettenverlängerungsmitteln als auch durch Mitverwendung geringer Mengen an monofunktionellen Reaktionspartnern der beispielhaft genannten Art erreicht werden.

Bei der Durchführung des erfindungsgemäßen Verfahrens werden die beispielhaft genannten Lacke lösungsmittelfrei (dies gilt insbesondere für die Zweikomponenten-Systeme oder feuchtigkeitstrocknenden Einkomponenten-Lacke, sofern die Anstrichmittel eine zu ihrer Verarbeitung

hinreichend niedrige Viskosität aufweisen) oder in in Lösungsmitteln der beispielhaft genannten Art gelöster Form verwendet. Die Mitverwendung der üblichen Hilfs- und Zusatzmittel wie z.B. Pigmente, Reaktionsverzögerer, Katalysatoren, flammhemmende Substanzen, Weichmacher, Farbstoffe oder Füllstoffe, sowie fungistatisch oder bakteriostatisch wirksamen Substanzen ist selbstverständlich möglich.

Die Beschichtung der Kautschuk-Formkörper kann nach allen bekannten Methoden der Lacktechnologie erfolgen. Vorzugsweise werden die Beschichtungsmittel auf den zu beschichtenden Formkörper aufgegossen und anschließend das gegebenenfalls mitverwendete Lösungsmittel abgedampft. Auf diese Weise können auch durch mehrmaliges Gießen die Beschichtungen in der erforderlichen Schichtdicke erhalten werden. Das erfindungsgemäße Verfahren gestattet auf einfache Weise die Herstellung von festhaftenden Beschichtungen einer Trockenfilmstärke von ca. 20 bis 150 $\mu$m. Die chemische oder physikalische Trocknung der Beschichtungen kann vor der Vulkanisation oder aber auch gleichzeitig mit der Vulkanisation erfolgen.

Gegebenenfalls erforderliche Vulkanisationshilfsmittel werden dem Kautschukformkörper vorzugsweise vor der Formgebung und Beschichtung einverleibt.

Die Vulkanisation erfolgt, wie bereits dargelegt im Anschluß an die Beschichtung des Formteils und kann nach allen beliebigen physikalischen oder chemischen Methoden durchgeführt werden. Das Formteil auf Basis von vulkanisierbarem, olefinisch ungesättigtem Kautschuk kann selbstverständlich neben den bereits beispielhaft genannten Vulkanisationshilfsmitteln alle in der Kautschuktechnologie üblichen Hilfs- und Zusatzmittel wie z.B. Ruß, Weichmacheröle, Lichtschutzmittel oder Hitzealterungsschutzmittel enthalten.

Nach Beendigung der Vulkanisationsreaktion liegt ein mit einer fest haftenden, anvulkanisierten Lackschicht versehenes Gummi-Formteil vor. Die so erhaltenen Formteile zeichnen sich durch eine hervorragende Haftung der Lackschicht aus. Die Lackschichten zeigen eine hohe Flexibilität sowohl bei erhöhten als auch bei erniedrigten Temperaturen. Grundsätzlich ist es auch möglich, die Lackschichten vor der Vulkanisation z.B. elektrostatisch zu beflocken, so daß zusätzliche Variationen der Oberflächenbeschaffenheit in einfacher Weise erzeugt werden können.

Die folgenden Beispiele erläutern die Erfindung. Alle Prozentangaben betreffen Gewichtsprozente.

Beispiel 1

A) Herstellung eines physikalisch trocknenden Polyurethanpolyharnstoff-Klarlacks mit einem Gehalt an =C=C= von 1,14 Gew.-%, bezogen auf Feststoff.

300 g (0,15 Mol) eines aus Adipinsäure, Butandiol und Hexandiol hergestellten Polyesters (OH-Zahl 56) werden 30 Minuten bei 120°C, 15 Torr entwässert. Dann werden der Schmelze 22 g (0,25 Mol) Buten-(2)-diol-(1,4) und 18 g (0,2 Mol) Butandiol-1,4 und 166,5 g (0,75 Mol) Isophorondiisocyanat (IPDI) zugefügt. Die Mischung wird 50 Minuten unter Stickstoff bei 120°C gerührt. Anschließend wird die NCO-Zahl des Prepolymeren ermittelt:
NCO gef.: 2,33 %, NCO ber.: 2,49 %.
Zu dem Prepolymeren werden dann 500 g Toluol zugefügt. Man läßt den Ansatz auf Raumtemperatur abkühlen und tropft innerhalb von 30 Minuten eine Lösung von 20,4 g (0,12 Mol) Isophorondiamin (IPDA) in 606 g Toluol und 474 g Isopropanol zügig hinzu. Nach vollständiger Zugabe läßt sich IR-spektroskopisch nur noch sehr wenig NCO nachweisen.
Man erhält eine 25 %ige Lösung der Viskosität 299 mPas/25°C.
Gehalt an $>C=C<$ , bezogen auf Feststoff: 1,14 Gew.-%.

B) Erfindungsgemäßes Verfahren zum Beschichten von Gummi

Zur Beschichtung wurde eine Kautschuk-Platte der Abmessung 165x65x2 mm gewählt, die folgende Zusammensetzung aufwies:

| | | |
|---|---|---|
| ölgestrecker SBR (ca. 15 % =C=C=) | 70,00 | Gew.-Teile |
| Lösungs-SBR (ca. 28 % =C=C=) | 42,00 | " " |
| Polyisopren (ca. 35 % =C=C=) | 11,20 | " " |
| Ruß | 110,30 | " " |
| Stearinsäure | 1,40 | " " |
| Lichtschutzwachs auf Paraffinbasis | 9,80 | " " |
| Weichmacher auf Naphthalenöl-Basis | 11,20 | " " |
| Zinkoxid | 5,05 | " " |
| Mercaptobenzimidazol | 1,95 | " " |
| Calciumoxid | 5,20 | " " |
| Mercaptobenzthiazoldisulfid | 1,40 | " " |
| Tetramethylthiuramdisulfid | 1,40 | " " |
| Schwefel | 1,40 | " " |

Die nach Verfahren A erhaltene Lösung wird mit einem Pinsel auf die genannte Kautschuk-Platte aufgetragen (Naßfilmstärke: 150 $\mu$m). Nach Abdünsten des Lösungsmittels wird der beschichtete Formkörper 30 Minuten bei 150°C vulkanisiert. Man erhält auf diese Weise eine hochglänzende beschichtete Gummiplatte, deren flexible Polyurethanbeschichtung sich von der Gummiplatte mit dem Fingernagel nicht entfernen läßt (Trockenfilmstärke: 80 $\mu$m).

C) Vergleichsbeispiel

Die nach Verfahren A erhaltene Lösung wird mit einer Rakel oder einem Pinsel auf eine vulkanisierte Gummiplatte aufgetragen. Nach Abdünsten des Lösungsmittels erhält man eine hochglänzende beschichtete Gummiplatte, deren flexible Polyurethanbeschichtung sich von der Gummiplatte mit dem Fingernagel leicht entfernen läßt.

Beispiel 2

300 g (0,15 Mol) eines aus Adipinsäure Hexandiol und Butandiol hergestellten Polyesters (OH-Zahl 56) werden 30 Minuten bei 120°C, 15 Torr entwässert. In die Schmelze werden 17,6 g (0,2 Mol) Buten-(2)-diol-(1,4), 6,7 g (0,05 Mol) Dimethylolpropionsäure und 18 g (0,2 Mol) Butandiol und dann 166,5 g (0,75 Mol) Isophorondiisocyanat (IPDI) zugegeben. Die Mischung wird 2 Stunden bei 120°C unter Stickstoff gerührt. Anschließend wird die NCO-Zahl des Prepolymeren ermittelt.
NCO gef.: 2,36 %, NCO ber.: 2,48 %

Zu dem Prepolymeren werden dann 500 g Toluol zugefügt. Maß läßt den Ansatz auf Raumtemperatur abkühlen und tropft innerhalb von 30 Minuten eine Lösung von 20,4 g (0,12 Mol) Isophorondiamin (IPDA) in 612 g Toluol und 477 g Isopropanol zügig hinzu. Nach vollständiger Zugabe läßt sich IR-spektroskopisch nur noch sehr wenig NCO nachweisen. Das gelöste Bindemittel enthielt 0,91 Gew.-% =C=C=, bezogen auf Feststoff.

Die auf diese Weise gewonnene Polyurethanlösung wird gemäß Beispiel 1 B) auf eine unvulkanisierte Kautschuk-Platte der in Beispiel 1 B) genannten Art aufgetragen. Nach Abdünsten des Lösungsmittels wird der beschichtete Gummi vulkanisiert. Das Beispiel zeigt, daß zusätzlich eingebaute polare Gruppen (hier -COOH) die Haftfestigkeit auf dem Gummi nicht beeinträchtigen.

Beispiel 3

Dieses Beispiel zeigt, daß ein Polyurethanpolyharnstoff, welcher keine olefinisch ungesättigte Gruppe im Polymermolekül enthält nach Beschichten und Vulkanisieren einer Gummiplatte eine schlechte Haftung aufweist - der Polyurethanfilm läßt sich mit dem Fingernagel leicht von der Gummiplatte abheben und abziehen.

300 g des im Beispiel 1 A) beschriebenen Polyesters werden 30 Minuten bei 120°C, 12 Torr entwässert. Dann werden der Schmelze 26 g (0,4 Mol) Butandiol, 6,7 g (0,05 Mol) Dimethylolpropionsäure und 166,5 (0,75 Mol) IPDI zugefügt. Die Mischung wird 60 Minuten bei 110°C unter Stickstoff gerührt. Anschließend wird die NCO-Zahl des Prepolymeren ermittelt.
NCO gef.: 2,50 %, NCO ber.: 2,47 %

Zu dem Prepolymeren werden dann 500 g Toluol portionsweise hinzugegeben. Das Gemisch wird auf Raumtemperatur abgekühlt. Anschließend tropft man innerhalb von 30 Minuten eine Lösung von 20,4 g (0,12 Mol) IPDA in 612 g Toluol und 477 g Isopropanol zügig hinzu. Nach vollständiger Zugabe läßt sich IR-spektroskopisch nur noch sehr wenig NCO nachweisen.

Die 25 %ige Lösung wird mit einem Pinsel auf eine unvulkanisierte Kautschukplatte der in Beispiel 1 B) genannten Art aufgetragen. Nach Abdünsten des Lösungsmittels wird der beschichtete Gummi bei 150°C 30 Minuten vulkanisiert. Die hochglänzende, flexible Polyurethanbeschichtung (Trockenfilmstärke: 80 µm) läßt sich mit dem Fingernagel von der Gummiplatte abheben und dann leicht vom Gummi entfernen.

Beispiel 4

A) Herstellung eines olefinische Doppelbindungen enthaltenden Lackpolyisocyanats

200 g (1,04 NCO-Äquivalente) eines im wesentlichen aus Tris-(isocyanatohexyl)-biuret bestehenden Biuretpolyisocyanats auf Basis von Hexamethylendiisocyanat werden mit 0,2 g Zinnoctoat gemischt und unter Stickstoff auf 80°C aufgeheizt. Unter Rühren werden dann 50 g (0,35 OH-Äquivalente) Methacrylsäure-ß-hydroxypropylester innerhalb von 10 Minuten zugetropft. Dabei wird die Heizquelle entfernt. Durch die exotherme Reaktion bleibt der Ansatz während der Umsetzung bei einer Temperatur von 80 bis 83°C. Nach vollständiger Zugabe wird der Ansatz abgekühlt und der NCO-Gehalt des modifizierten Isocyanats ermittelt:

NCO gefunden: 10,5 %
NCO berechnet: 11,6 %

Anschließend wird dem Ansatz zur Stabilisierung 0,25 g Hydrochinon zugesetzt.

B) Herstellung eines Zweikomponenten-Klarlacks

20,8 g des unter A) beschriebenen modifizierten Polyisocyanats (0,052 NCO-Äquivalente) werden mit 46,2 g Toluol und 10 g (0,052 OH-Äquivalente) eines Polyesters aus Adipinsäure, Phthalsäureanhydrid, Maleinsäureanhydrid, Propylenglykol-1,2 und Trimethylolpropan der

OH-Zahl 290 (8,8 % OH) gemischt. Die so erhaltene Lacklösung weist eine Viskosität von 30 mPs/25°C auf. Der Gehalt des gelösten Zweikomponenten-Bindemittels an =C=C= liegt bei 2,27 %.

C) Erfindungsgemäßes Verfahren

Zur Durchführung des erfindungsgemäßen Verfahrens wurde hier eine Kautschukplatte der Abmessung 170x70x2 mm mittels eines Pinsels mit der obengenannten Lacklösung beschichtet. Der hierbei verwendete Kautschuk entsprach folgender Zusammensetzung:

| | |
|---|---|
| Polychloropren (ca. 27 % =C=C=) | 41,00 Gew.-Teile |
| EPDM (ca. 1,6 % =C=C=) | 59,00 " " |
| Ruß | 83,00 " " |
| mineralisches Weichmacheröl | 32,00 " " |
| Magnesiumoxid | 1,60 " " |
| Zinkoxid | 3,41 " " |
| Calciumoxid | 3,41 " " |
| Benzoylperoxid | 4,25 " " |

Nach Abdunsten des Lösungsmittels wird die lackierte Platte während 30 Minuten auf 150°C erhitzt. Man erhält eine hochglänzende, flexible, beschichtete Platte aus vulkanisiertem Gummi, deren Beschichtung sich mit dem Fingernagel nicht entfernen läßt (Trockenfilmstärke: 80 µm).

Patentansprüche

1) Verfahren zur Herstellung eines mit einer fest haftenden Lackschicht versehenen Formteils aus vulkanisiertem Gummi, dadurch gekennzeichnet, daß man auf mindestens einen Teil der Oberfläche des Formteils aus, die üblichen Hilfs- und Zusatzmittel enthaltendem, olefinische Doppelbindungen aufweisendem Kautschuk, vor der Vulkanisation einen Lack aufträgt, welcher ein an der Vulkanisationsreaktion teilnehmende Gruppen aufweisendes Bindemittel enthält, und das so beschichtete Formteil einer Vulkanisationsreaktion unterzieht.

2. Verfahren gemäß Anspruch 1, dadurch gekennzeichnet, daß man als Lack einen 1- oder 2-Komponenten-Polyurethanlack verwendet, der als Bindemittel oder Bindemittelkomponente olefinisch ungesättigte, zur Teilnahme an der Vulkanisationsreaktion befähigte Gruppen enthaltende Verbindungen aufweist.

3. Formkörper aus vulkanisiertem Gummi, gekennzeichnet durch eine anvulkanisierte Lackschicht.

0017754

Nummer der Anmeldung

Europäisches Patentamt

**EUROPÄISCHER RECHERCHENBERICHT**

EP 80 10 1254

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | US - A - 4 072 645 (GOODYEAR TIRE & RUBBER)<br>* Ansprüche 1,6-9; Spalte 1, Zeilen 28-55 *<br>-- | 1,3 | C 08 J 7/04<br>B 05 D 7/02 |
| | DE - A - 1 669 880 (DUNLOP)<br>* Anspruch 1; Seite 3, Zeile 25 bis Seite 4, Zeile 10; Seite 4, Zeile 25 bis Seite 5, Zeile 21 *<br>-- | 1,3 | |
| | FR - A - 2 393 827 (AKZO)<br>* Anspruch 1; Seite 1, Zeilen 31-38; Beispiel 1 * | 2 | **RECHERCHIERTE SACHGEBIETE (Int. Cl. 3)**<br>C 08 J 7/04<br>5/12<br>B 05 D 7/02 |
| D | & DE - A - 2 823 350<br>-- | | |
| A | US - A - 3 528 848 (H. ZOEBELEIN) | | |
| A | FR - A - 2 322 889 (GOODYEAR TIRE & RUBBER) | | |
| | DE - C - 818 576 (BAYER)<br>* Anspruch; Beispiel 1 *<br>----- | 1-3 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 31-07-1980 | HALLEMEESCH |